(19) Europäisches Patentamt

European Patent Office

Office européen des brevets

(11) **EP 0 588 581 B1**

(12) **EUROPEAN PATENT SPECIFICATION**

(45) Date of publication and mention
of the grant of the patent:
**13.08.1997 Bulletin 1997/33**

(51) Int Cl.6: **C08F 297/08**

(21) Application number: **93307190.4**

(22) Date of filing: **13.09.1993**

(54) **Polypropylene block copolymers and films thereof**

Propylenblockkopolymere und daraus hergestellte Filme

Copolymères séquencés de propylène et films à partir de ceux-ci

(84) Designated Contracting States:
**DE FR GB IT**

(30) Priority: **16.09.1992 JP 246159/92**
**16.09.1992 JP 246160/92**

(43) Date of publication of application:
**23.03.1994 Bulletin 1994/12**

(73) Proprietor: **SUMITOMO CHEMICAL COMPANY LIMITED**
**Osaka-shi, Osaka 541 (JP)**

(72) Inventors:
• **Sadatoshi, Hajime**
**Ichihara-shi, Chiba (JP)**
• **Ima, Seiichiro**
**Ichihara-shi, Chiba (JP)**
• **Wakamatsu, Kazuki**
**Sodegaura-shi, Chiba (JP)**
• **Mori, Jiro**
**Singapore 1025 (SG)**
• **Shiratani, Eisuke**
**Ichihara-shi, Chiba (JP)**

(74) Representative: **Dixon, Donald Cossar et al**
**Gee & Co.**
**Chancery House**
**Chancery Lane**
**London WC2A 1QU (GB)**

(56) References cited:
**EP-A- 0 515 855**      **US-A- 4 284 738**

Remarks:
The file contains technical information submitted after the application was filed and not included in this specification

## Description

The present invention relates to polypropylene block copolymers and films thereof. More specifically, the invention relates to polypropylene block copolymers and films thereof which are free of fish eyes and have good appearance, and excellent low-temperature impact resistance, heat resistance, and blocking resistance.

Since polypropylene films have, inter alia, excellent appearance, mechanical properties and packaging suitability, they are widely used in packaging fields such as food packaging and fiber packaging.

Unstretched polypropylene films each comprising a propylene homopolymer, a random copolymer of propylene and an $\alpha$-olefin, or a polypropylene block copolymer are used in various packaging applications by utilizing the particular properties of each of the propylene homopolymer, the random polymer of propylene and $\alpha$-olefin, and the polypropylene block copolymer. However, conventional unstretched polypropylene films are insufficient in at least one property such as appearance, impact resistance at low temperature, heat resistance, and blocking resistance, according to the polymer or the copolymer used for each film. Hence, the use of each film is correspondingly restricted.

In more detail, film comprising propylene homopolymer may have excellent appearance, heat resistance, and blocking resistance but is poor in impact resistance at low temperature; film comprising random copolymer of propylene and $\alpha$-olefin is poor in appearance, impact resistance at low temperature, and heat resistance; and film comprising polypropylene block copolymer may to some extent have excellent impact resistance at low temperature but has poor appearance due to the occurrence of fish eyes or poor blocking resistance. As described above, each film is thus restricted with respect to its use.

Furthermore, to improve the above-described characteristics, it has been attempted to compound the propylene polymer or copolymer with low crystalline EPR (ethylene propylene rubber), but this attempt has not yet resulted in sufficient low-temperature impact resistance and heat resistance.

Thus, the development of polypropylene film having excellent appearance, impact resistance at low temperature, heat resistance and blocking resistance has been sought; and various attempts have been made to improve the above-described characteristics by, for example, using mainly a polypropylene block copolymer.

JP-B-58-10414 (the term "JP-B" as used herein means an "examined published Japanese patent application") discloses a continuous production process for producing a polypropylene block copolymer, wherein the ratio of the intrinsic viscosity of the second polymerizing portion to the intrinsic viscosity of the first polymerizing portion is adjusted in the range of from 1 to 1.2, and describes a practical method for producing a polymer by a solvent polymerization method. A film exhibiting no fish eyes, and having good appearance, heat resistance and blocking resistance, is obtained by this process, but the film has insufficient low-temperature impact resistance.

JP-A-56-84712 (the term "JP-A" as used herein means an "unexamined published Japanese patent application") discloses a polypropylene block copolymer having the features that the melt flow index is from 0.01 to 0.3 g/10 minutes, which is suitable for an air-cooled inflation molding method; the ethylene content of the portion A is less than 20% by weight; and the ethylene content of the portion B is at least 20% by weight, and describes a practical method for producing a polymer by a solvent polymerization method. However, the copolymer thus obtained is insufficient with respect to workability and impact resistance at low temperature.

JP-A-59-115312 and JP-A-59-74109 disclose a production process of a polymer composition for a retort film and a film for a retort food packaging bag. However, the polymer composition wherein the first stage melting point is in the range of from 132 to 155°C has poor heat resistance, and also has insufficient low-temperature impact resistance. Further, the polymer composition wherein the first stage melting point is 159.6°C has insufficient low-temperature impact resistance.

JP-A-1-225648 describes a propylene copolymer composition, wherein the intrinsic viscosity of the B component is 1.92 dl/g or less and which is produced by a solvent polymerization method. However, this composition has poor low-temperature impact and blocking resistance, or has a poor appearance caused by the occurrence of fish eyes or poor workability.

We have attempted to develop a polypropylene block copolymer and film thereof having good impact resistance at low temperature, good appearance and good blocking resistance, without losing such preferred characteristics as heat resistance inherently possessed by polypropylene copolymer and succeeded in overcoming the above-described disadvantages of conventional propylene copolymers.

However, in the conventional solvent polymerization and bulk polymerization methods, an ethylene-propylene copolymer portion, which is the component effective for enhancing impact resistance at low temperature, is dissolved in a solvent or a liquid monomer, whereby the copolymer obtained has insufficient low-temperature impact resistance, and it is thus difficult to attain the object defined above.

We have found that the above-defined object can be attained by melt-kneading a specific block copolymer obtained by polymerization in the substantial absence of inert solvent and by melt-extruding the block copolymer to form a film thereof.

According to the present invention there is provided a polypropylene block copolymer comprising a melt-kneaded polypropylene block copolymer which is obtained by polymerizing, in a first step, monomer comprising propylene in the present of a Ziegler-Natta catalyst and in the absence of an inert solvent to give a polymer comprising polypropylene (component A) in an amount of from 60 to 80% by weight of the total amount of the polypropylene block copolymer and then, in a second step, a mixture of ethylene and propylene in the vapor phase to give an ethylene-propylene copolymer (component B) having an ethylene content of from 20 to 50% by weight in an amount of 20 to 40% by weight of the total amount of the polypropylene block copolymer and melt-kneading the resulting polypropylene block copolymer, wherein the intrinsic viscosity of component B ($[\eta]$B) is at least 2.0 dl/g and the ratio ($[\eta]$B/$[\eta]$A) of the intrinsic viscosity of the component B ($[\eta]$B) to the intrinsic viscosity of the component A ($[\eta]$A]) is 1.8 or less.

There is also provided according to the present invention a film formed by melt-extruding the polypropylene block copolymer so formed.

The present invention is described in detail below.

The polypropylene block copolymer of the present invention is a melt-kneaded polypropylene block copolymer which is obtained by polymerizing monomer comprising propylene in substantially the absence of an inert solvent and in the presence of a Ziegler-Natta catalyst, and then polymerizing ethylene-propylene monomer in the vapor phase.

In this case, it is necessary that the proportion of the polymer comprising propylene (component A) is in the range of from 60 to 75% by weight and the proportion of the ethylene-propylene copolymer component B is in the range of from 25% to 40% by weight.

If the proportion of the component B is less than 25% by weight, the impact resistance at low temperature is reduced, while if the proportion of the component B is over 40% by weight, problems occur with the polymerization, and either productivity is greatly reduced or the heat resistance of the obtained polypropylene block copolymer is reduced.

Component A is preferably a propylene homopolymer having a melting point of at least 160°C from the point of view of heat resistance and rigidity but if component A has a melting point of 157°C or higher, the polymer may be a copolymer of propylene and a small amount of an $\alpha$-olefin such as ethylene or butene-1.

It is necessary that the ethylene-propylene copolymer (component B) has an ethylene content of from 20 to 50% by weight and an intrinsic viscosity of ($[\eta]$B) of at least 2.0 dl/g.

If the ethylene content is less than 20% by weight, the impact resistance at low temperature is decreased, while if the ethylene content is over 50% by weight, the appearance and the low-temperature impact resistance of the film are poor; and, on the other hand, if $[\eta]$B is less than 2.0 dl/g, the blocking resistance and the low temperature impact resistance are poor. Thus, in these cases the object of the present invention cannot be attained.

The ethylene content of the component B is preferably in the range of from 25 to 45% by weight from the point of view of appearance and impact resistance. Also, $[\eta]$B is preferably at least 2.5 dl/g, and more preferably in the range of from 2.5 to 4.5 dl/g.

Furthermore, it is necessary that the ratio $[\eta]$B/$[\eta]$A is 1.8 or less. If the ratio $[\eta]$B/$[\eta]$A is over 1.8, the appearance of the film is impaired due to the occurrence of fish eyes, whereby the film cannot be used for commercial purposes.

The ratio $[\eta]$B/$[\eta]$A is preferably in the range of from 0.8 to 1.7 from the point of view of low-temperature impact resistance and appearance.

The polypropylene block copolymer of the present invention is obtained by melt-kneading the block copolymer described above.

The melt flow rate of the polypropylene block copolymer after melt-kneading is preferably from 0.5 to 10 g/10 minutes, and more preferably from 1.0 to 5.0 g/10 minutes from the points of view of high-speed film-formation stability, appearance, etc.

The process of obtaining the polypropylene block copolymer having a melt flow rate of from 0.5 to 10 g/10 minutes from the block copolymer defined in the present invention is not particularly limited as long as a process of conducting melt-kneading by a conventional method in the presence or absence of an organic peroxide is employed.

In the polypropylene block copolymer of the present invention, the content of 20°C xylene-soluble components is preferably from 10 to 30% by weight, and more preferably from 10 to 25% by weight from the point of view of impact resistance at low temperature, heat resistance, and solvent resistance.

It is necessary for food packaging film that the content of the component (L-CXS) having a molecular weight of 50,000 or less in the 20° xylene-soluble components in the polypropylene block copolymer after melt-kneading is 2.0% by weight or less. If the content of L-CXS in the total polymer is over 2.0% by weight, the hexane extractable amount, which is an important factor for food hygiene, is increased.

The polypropylene block copolymer of the present invention can be produced, using a Ziegler-Natta catalyst, by a batch type polymerization method comprising polymerizing the monomer comprising propylene in a polymerization reactor and successively polymerizing ethylene-propylene in the same polymerization reactor or by a continuous polymerization method comprising continuously polymerizing the monomer comprising propylene and ethylene-propylene, using at least two polymerization reactors.

Practically, for example, the polypropylene block copolymer can be produced by polymerizing the monomer com-

EP 0 588 581 B1

prising propylene to form the polymer comprising propylene (component A) while supplying propylene and hydrogen for controlling the molecular weight in substantially the absence of an inert solvent in the first step, and successively polymerizing ethylene-propylene to form the ethylene-propylene copolymer (component B) while supplying propylene, ethylene, and hydrogen in the vapor phase in the second step, Ziegler-Natta catalyst containing at least titanium, magnesium and a halogen as the essential components, such as a catalyst system comprising

(a) a trivalent titanium compound-containing solid catalyst component obtained by reducing a titanium compound represented by the formula $Ti(OR^1)_nX_{4-n}$ (wherein $R^1$ represents a hydrocarbon group having from 1 to 20 carbon atoms; X represents a halogen atom; and n represents a number of $0 < n \leq 4$) with an organic magnesium compound in the co-presence of an organosilicon compound having a Si-O bond to obtain a solid product and treating the solid product thus obtained with an ester compound and a mixture of an ether compound and titanium tetrachloride,
(b) an organoaluminum compound, and
(c) a silicon compound having a Si-$OR^2$ bond (wherein $R^2$ represents a hydrocarbon group having from 1 to 20 carbon atoms),

or a catalyst system comprising

(a') a hydrocarbyloxy group-containing catalyst component obtained by reducing a titanium compound represented by the formula $Ti(OR^1)_nX_{4-n}$ (wherein $R^1$ represents a hydrocarbon group having from 1 to 20 carbon atoms; X represents a halogen atom; and n represents a number of $0 < n \leq 4$) with an organoaluminum compound represented by the formula $AlR^2_mY_{3-m}$ (wherein $R^2$ represents a hydrocarbon group having from 1 to 20 carbon atoms; Y represents a halogen atom; and m represents a number of $1 \leq m \leq 3$) to obtain a solid product which is insoluble in a hydrocarbon solvent and having a hydrocarbyloxy group, and after prepolymerization treatment of the solid product with ethylene, treating the same in a slurry state in the presence of an ether compound and titanium tetrachloride in a hydrocarbon solvent at a temperature of from 80°C to 100°C, and
(b) an organic aluminum compound,

in a manner such that the molar ratio of the Al atom in the component (b) to the Ti atom in the component (a) (Al/Ti) becomes from 1 to 2,000, and preferably from 5 to 1,500 and the molar ratio of the component (c) to the Al atom in the component (b) becomes from 0.02 to 500, and preferably from 0.05 to 50, under the conditions of a polymerization temperature of from 20 to 150°C, and preferably from 50 to 95°C and a polymerization pressure of from the atmospheric pressure to 40 kg/cm$^2$ G, and preferably from 2 to 40 kg/cm$^2$ G.

The polypropylene block copolymer film of the present invention can be produced by the conventional film-forming method such as a T-die method, a tubular method, etc., but is particularly preferably produced by a production process of an unstretched film by a T-die method.

There is no particular restriction on the thickness of the polypropylene block copolymer film of the present invention, but the thickness of the film is preferably from 10 to 500 μm, and more preferably from 10 to 100 μm.

Since the polypropylene block copolymer film of the present invention has excellent appearance, impact resistance at low temperature, blocking resistance, and heat resistance, the film is particularly preferred for packaging heavy materials at low temperature.

Also, the film of the present invention can be suitably used as at least one layer of a composite film produced by a dry lamination method or an extrusion lamination method with other film such as a polypropylene biaxially stretched film, an unstretched nylon film, a stretched polyethyl terephthalate film or an aluminum foil.

The polypropylene block copolymer film of the present invention may be subject to a surface treatment by a conventional industrially-employed method such as corona discharge treatment, flame treatment, plasma treatment or ozone treatment.

The polypropylene block copolymer of the present invention and the film thereof may, if necessary, contain an antioxidant, an ultraviolet absorber, an antistatic agent, antifogging agent, a lubricant, an anti-blocking agent, a nucleating agent, etc.

The present invention is illustrated in more detail by the following Examples but the scope of the present invention is not limited to these Examples.

In addition, the measurement value of each item in the specification including the Examples was measured by the following method.

(1) Contents of Component A and Component B:

From the material balance of the polymerization, the content (PA) of the component A and the content (PB) of the component B were determined.

4

(2) Intrinsic Viscosity ([η]):

Measured in tetralin at 135°C using a Ubbellohde's viscometer.

Intrinsic viscosities of the component A and the component B ([η]A, [η]B):

From the intrinsic viscosity [η]A of the component A measured after completion of the polymerization in the 1st step, the intrinsic viscosity [η]AB measured after completion of the polymerization in the 2nd step, the content (PA) of the component A, and the content (PB) of the component B, the intrinsic viscosity [η]B of the component B was determined by the following equation;

$$[η]A \times PA/100 + [η]B \times PB/100 = [η]AB$$

(3) Ethylene Content:

Determined by IR specral method according to the method described in Kobunshi Bunseki (Macromolecular Analysis) Handbook, pages 256-257, "(ii) Block Copolymer", published by Asakura Shoten, 1985.

(4) Melt Flow Rate (MFR):

Measured by the method of Condition-14 according to JIS K7210.

(5) content of 20°C Xylene-Soluble Components (CXS):

After completely dissolving 5 g of polypropylene in 500 ml of boiling xylene, the temperature was lowered to 20°C and the solution was allowed to stand for at least 4 hours. Precipitates formed were filtered off and the filtrate obtained was evaporated to dryness and dried at 70°C under a reduced pressure. The weight thereof was measured to determine the content (weight%).

(6) Amount of Component (L-CXS) Having Molecular Weight of 50,000 or less of the 20°C Xylene-Soluble Component (CXS):

The 20°C xylene-soluble component was sampled, and the sample was measured by gel permeation chromatography (GPC) to obtain the molecular weight distribution graph. The content (W) of the components having a molecular weight of 50,000 or less (converted as polystyrene) was obtained from the graph, and L-CXS was determined by the following equation;

$$L\text{-}CXS = Total\ CXS\ Contents \times W$$

GPC Measurement Condition:

By a gel permeation chromatography (GPC), the molecular weight was measured under the following conditions. Also, the calibration curve was made using standard polystyrene.

Apparatus: Type 150CV, manufactured by Millipore Waters Co.

Column: Shodex M/S 80
Measurement Temperature: 145°C,
Solvent: o-Dichlorobenzene
Sample Concentration: 5 mg/8 ml

In addition, when Standard Reference Material 706 (polystyrene of Mw/Mn = 2.1) of NBS (National Bureau of Standards) was measured under the above conditions, the molecular weight distribution (Mw/Mn = 2.1) was obtained.

(7) Melting Point (Tm):

After previously melting 10 mg of a test piece at 220°C for 5 minutes under a nitrogen gas atmosphere using a differential scanning calorimeter (DSC, trade name, manufactured by Perkin-Elmer Co.), the temperature was decreased to 40°C at a temperature-decreasing rate of 5°C/minute.

Thereafter, the temperature was raised at a temperature-raising rate of 5°C/minute, and the peak temperature of the maximum peak of the molten endothermic curve obtained was defined as the melting point (Tm).

In addition, the melting point of indium (In) measured by using the above measurement apparatus at a temperature-rasing rate of 5°C/minutes was 156.6°C.

Film Characteristics:

Measured on each film having a thickness of 30 μm by the following methods.

(8) Appearance:

Fish eyes (FE) having a diameter of at least 200 μm were visually observed on each sample film; a film wherein the number of FE was about 10/1000 cm$^2$ or less was defined as good, and a film wherein the number of WF was about 15/1000 cm$^2$ or more was defined as bad.

(9) Impact Resistance:

The impact strength of each film was measured at -10°C using a hemispherical impact head having a diameter of 15 mm by a film impact tester manufactured by Toyo Seiki Seisaku-sho, LTD.

(10) Blocking Resistance:

Films each having an area of 225 mm x 50 mm were superposed each other and under loading the range thereof of 100 mm x 50 mm with 40 g/cm$^2$, the state control was carried out for 3 hours at 60°C. Thereafter, the assembly was allowed to stand in an atmosphere of 23°C and 50% humidity for at least 30 minutes and the strength required to peel the sample films from each other was measured at a peeling load rate of 20 g/minutes using a blocking tester manufactured by Shimazu Corporation.

(11) Heat Sealing Temperature:

Films were superposed on each other and heat sealed by press-adhering for 2 seconds at a load of 2 kg/cm$^2$ G using a heat sealer (manufactured by Toyo Seiki Seisaku-sho, LTD.) heated to a definite temperature. After allowing them to stand overnight, the sealing temperature at which the peeling resisting force when they were peeled from each other at 23°C, a peeling rate of 200 mm/minute, and a peeling angle of 180° became 300 g/mm was obtained and the temperature was defined as the heat sealing temperature.

Food Hygiene:

Measured each film having a thickness of 60 μm by the following methods.

(12) Hexane Extracted Amount:

The n-hexane extracted amount of the film having a thickness of 60 μm at 50°C was measured according to the method described in FDA 177. 1520 (d) (3) (ii). In addition, the regulated value of the hexane extracted amount in the case of using the film for retort food packaging is 2.6% by weight or less.

(13) Xylene-Soluble Component:

The amount of the xylene-soluble component at 25°C was measured according to the method described in FDA 177. 1520 (d) (4). In addition, the regulated value of the content of the xylene-soluble component in the case of using the film for food packaging is 30% by weight or less.

Reference Example

(a) Synthesis of Organomagnesium Compound:

After displacing the inside atmosphere of a one liter flask equipped with a stirrer, a reflux condenser, a dropping funnel, and a thermometer with argon, 32.0 g of scraped magnesium for a Grignard reagent was placed in the flask. In the dropping funnel were charged 120 g of butyl chloride and 500 ml of di-butyl ether and about 30 ml of the mixture in the dropping funnel was added dropwise to magnesium in the flask to initiate the reaction. After the initiation of the reaction, the mixture in the dropping funnel was added dropwise to the mixture in the flask at 50°C over a period of 4 hours and after completion of the addition thereof, the reaction was further continued at 60°C for one hour. The reaction mixture obtained was cooled to room temperature and the solid matters thus formed were filtered off.

When butyl magnesium chloride in dibutyl ether recovered as the filtrate was hydrolyzed with 1N sulfuric acid and the concentration thereof was determined by back titrating with an aqueous solution of 1N sodium hydroxide using phenol-phthalein as an indicator, the concentration was 2.1 mol/liter.

(b) Synthesis of Solid Product:

After displacing the inside atmosphere of a 500 ml flask equipped with a stirrer and a dropping funnel with argon, 240 ml of hexane, 5.4 g (15.8 mmols) of tetrabutoxytitanium, and 61.4 g (295 mmols) of tetraethoxysilane were placed in the flask to form a homogeneous solution. 150 ml of the organomagnesium compound synthesized in (a) described above was then gradually added dropwise to the solution from the dropping funnel over a period of 4 hours while maintaining the inside temperature of the flask at 5°C. After further stirring the reaction mixture for one hour at room temperature, solid product formed was separated from the liquid phase, repeatedly washed 3 times with 240 ml of hexane, and dried under a reduced pressure to obtain 45.0 g of a light brown solid product.

The solid product obtained contained 1.7% by weight of titanium, 33.8% by weight of ethoxy groups, and 2.9% by weight of butoxy groups.

Also, in the wide angle X-ray diffraction pattern of the solid product by a Cu-K$\alpha$ ray, no clear diffraction peaks were observed, which showed the solid product to have a non-crystalline structure.

(c) Synthesis of Ester-Treated Solid:

After displacing the inside atmosphere of a 100 ml flask with argon, 6.5 g of the solid product synthesized in (b) described above, 16.2 ml of toluene, and 4.3 ml (16 mmols) of diisobutyl phthalate were placed in the flask and the reaction was conducted at 95°C for one hour. After the reaction was over, the solid product formed was separated from the liquid phase and washed 3 times with 33 ml of toluene.

(d) Synthesis of Solid Catalyst (Activation Treatment):

After washing the solid product in above (c), 16.1 ml of toluene, 0.36 ml (1.3 mmols) of diisobutyl phthalate, 2.2 ml (13 mmols) of butyl ether, and 38.0 ml (346 mmols) of titanium tetrachloride were added to the solid product in the flask and the reaction was conducted at 95°C for 3 hours. After the reaction was over, solid product formed was separated from the liquid phase at 95°C and washed twice with 33 ml of toluene at the same temperature as above. The treatment with the mixture of diisobutyl phthalate, butyl ether, and titanium tetrachloride described above was further repeated once more under the same conditions and the product was washed 3 times with 33 ml of hexane to obtain 5.0 g of a yellow ocher color solid catalyst.

The solid catalyst contained 2.1% by weight of titanium, 19.9% by weight of magnesium, and 12.7% by weight of phthalic acid ester.

Example 1

(a) Catalyst Component

To a 250 liter reaction vessel equipped with a stirrer was placed 150 liters of sufficiently purified hexane and after sufficiently displacing the inside atmosphere of the system with nitrogen, 3.2 mols of triethylaluminum (TEA), 0.32 mol of cyclohexylethyldimethoxysilane (CHEDMS), and 51.8 g (converted as Ti) of the solid catalyst obtained in the Reference Example described above were added to hexane in the reaction vessel. 2.8 kg of propylene was then continuously added to the mixture at 25°C over a period of 2 hours.

(b) Polymerization

An apparatus comprising three vapor phase polymerization reactors connected in series, each having an inner volume of 20-45 m$^3$, was used. Three reactors are represented by X, Y and Z. Homopolymerization of propylene was conducted in X and Y reactors. Polymerization pressure was 20 kg/cm$^2$G in X reactor and 17 kg/cm$^2$G in Y reactor, and polymerization temperature was 80°C in X and Y reactors. Reaction time was controlled such that an average retention time of sum of X and Y reactors became 7 hours by continuously supplying the catalyst component prepared in (a) above to X reactor. At the same time, TEA and CHEDMS were supplied in amounts of 2 mol/hr and 0.3 mol/hr,

respectively, and $H_2$ was continuously supplied such that the $H_2$ concentration in X and Y reactors was 0.01 %.

The polymer discharged from Y reactor was transferred into Z reactor, and propylene and ethylene were polymerized at a temperature of 70°C under a pressure of 14 kg/cm$^2$G and in a retention time of 3 hours. Ethylene, propylene and $H_2$ were supplied such that the ethylene concentration was 25 % and the $H_2$ concentration was 0.5 %.

In the block copolymer obtained, the content of component A was 73 % by weight, the intrinsic viscosity of component A ($[\eta]A$) was 3.0 dl/g, the content of component B was 27 % by weight, the content of ethylene was 34 % by weight, the intrinsic viscosity ($[\eta]B$) was 3.4 dl/g, and $[\eta]B/[\eta]A$ was 1.1.

To 100 parts by weight of the block copolymer powder were added 0.1 part by weight of calcium stearate, 0.2 part by weight of Sumilizer BHT (trade name, made by Sumitomo Chemical Company, Limited), 0.1 part by weight of Irganox 1010 (trade name, made by Ciba-Geigy AG) and 0.02 part by weight of 2,5-dimethyl-2,5-di(tert-butylperoxy)hexane. After mixing the resulting mixture with Henschel mixer, pellets were formed by melt-extruding. In the pellets, the melt flow rate was 2.5g/10 min, the content of 20°C xylene-soluble component was 17.0 % by weight, and the melting point was 163°C.

The pellets obtained were melt-extruded with a T-die film formation machine (diameter: 50 mm) at a die temperature of 280°C and cooled with cooling rolls having passed therethrough 30°C water to obtain an unstretched film having a thickness of 30 µm. The appearance, impact strength and blocking resistance of the film obtained were evaluated. The evaluation results are shown in Table 1 below.

## TABLE 1

| | Polypropylene Block Copolymer Composition | | | | |
|---|---|---|---|---|---|
| | Propylene polymer | | Ethylene-propylene copolymer | | |
| | Content (wt%) | [η]A (dl/g) | Content (wt%) | Ethylene content (wt%) | [η]B (dl/g) |
| Example 1 | 73 | 3.0 | 27 | 34 | 3.4 |
| Example 2 | 69 | 2.4 | 31 | 40 | 3.7 |
| Example 3 | 72 | 3.1 | 28 | 34 | 2.9 |
| Example 4 | 71 | 2.9 | 29 | 34 | 3.3 |
| Example 5 | 64 | 3.0 | 36 | 36 | 3.5 |
| Comparative Example 1 | 74 | 3.1 | 26 | 32 | 3.1 |
| Comparative Example 2 | 85 | 2.3 | 15 | 42 | 4.7 |
| Comparative Example 3 | 72 | 3.2 | 28 | 15 | 2.6 |
| Comparative Example 4 | 63 | 3.2 | 37 | 58 | 4.0 |
| Comparative Example 5 | 67 | 2.9 | 33 | 32 | 3.6 |

TABLE 1 (Cont'd)

| | Properties of Polyethylene Block Copolymer | | | 20°C Xylene-Soluble Components | |
| | | | | | |
| | [η]B/[η]A | MFR (g/10min) | Total content (wt%) | | Content of components having molecular weight of 50,000 or less (wt%) |
| Example 1 | 1.1 | 2.5 | 17.0 | | – |
| Example 2 | 1.5 | 1.4 | 24.0 | | 3.5 |
| Example 3 | 0.9 | 1.6 | 16.8 | | 1.7 |
| Example 4 | 1.1 | 2.3 | 17.0 | | 1.2 |
| Example 5 | 1.2 | 3.3 | 18.4 | | 1.5 |
| Comparative Example 1 | 1.0 | 1.9 | 11.7 | | 1.0 |
| Comparative Example 2 | 2.0 | 1.1 | 9.0 | | 1.0 |
| Comparative Example 3 | 0.8 | 2.4 | 9.5 | | 1.2 |
| Comparative Example 4 | 1.3 | 1.8 | 15.6 | | 1.5 |
| Comparative Example 5 | 1.2 | 13 | 18.4 | | 3.7 |

Examples 2 to 5

The same procedure as in Example 1 was followed except that in the polymerization steps, the concentration of $H_2$ in the 1st step and the concentrations of ethylene and $H_2$ and the polymerized amount in the 2nd step were changed and after mixing and forming pellets, the same procedure as in Example 1 was followed except that the compounding amount of 2,5-dimethyl-2,5-di(tert-butylperoxy)hexane was changed.

The melting point of the pellets obtained in Examples 2 to 5 was 164°C.

Using each of the pellets thus obtained, a film was formed and evaluated as in Example 1. The evaluation results are shown in Table 2 below.

Comparative Example 1

Using a polymerization reactor having an inside volume of 23 $m^3$ equipped with a stirrer, propylene was polymerized in the co-presence of the solid catalyst described in JP-B-3-46001, diethylaluminum chloride, an electron donor, and hydrogen, using heptane as a solvent, at a polymerization temperature of 60°C, a polymerization pressure of 9 $kg/cm^2$ G, and a gaseous phase hydrogen concentration of 1.5%. In succession, propylene and ethylene were polymerized in the same polymerization reactor for 3 hours at a polymerization temperature of 50°C and a polymerization pressure of 5 kg/cm$^2$ G. Ethylene, propylene, and H$_2$ were supplied such that the ethylene concentration became 32%, and the H$_2$ concentration became 4.5% by weight.

In the block copolymer obtained, the content of component A was 74% by weight, the intrinsic viscosity of component A ([η]A) was 3.1 dl/g, the content of component B was 26% by weight, the content of ethylene was 32% by weight, the intrinsic viscosity of component B ([η]B) was 3.1 dl/g, and [η]B/[η]A was 1.0.

Using the block copolymer, pellets were formed as in Example 1. In the pellets, the melt flow rate was 1.9 g/10 minutes and the content of the 20°C xylene-soluble components was 11.7% by weight.

Using the pellets thus obtained, the film was formed and evaluated as in Example 1. The evaluation results are shown in Table 2.

Comparative Examples 2 to 4

The same procedure as in Example 1 was followed except that in the polymerization steps, the concentration of H$_2$ in the 1st step and the concentrations of ethylene and H$_2$ and the polymerized amount in the 2nd step were changed and after mixing and forming pellets, the same procedure as in Example 1 was followed except that the compounding amount of 2,5-dimethyl-2,5-di(tert-butylperoxy)hexane was changed. The evaluation results are shown in Table 2 below.

Comparative Example 5

The same procedure as in Example 1 was followed except that in the polymerization steps, the concentration of H$_2$ in the 1st step and the concentrations of ethylene and H$_2$ and the polymerized amount in the 2nd step were changed. After mixing and forming pellets, the same procedure as in Example 1 was followed except that the compounding amount of 2,5-dimethyl-2,5-di(tert-butylperoxy)hexane was changed to 0.1 part by weight. The evaluation results are shown in Table 2 below.

EP 0 588 581 B1

## TABLE 2

| | | Film Properties | | | | |
|---|---|---|---|---|---|---|
| | | | | | Food Hygiene | |
| | Appearance | Impact strength (kg.cm/mm) | Blocking resistance (g/100cm$^2$) | Hexane extructed amount (wt%) | Xylene-soluble components (wt%) | Heat sealing temperature (°C) |
| Example 1 | Good | 101 | 22 | 2.0 | – | – |
| Example 2 | " | 90 | 10 | 5.6 | – | – |
| Example 3 | " | 87 | 22 | 2.5 | 20.9 | 150 |
| Example 4 | " | 92 | 29 | 1.5 | 21.0 | 149 |
| Example 5 | " | 92 | 31 | 2.0 | 23.0 | 148 |
| Comparative Example 1 | " | 29 | 0 | 0.8 | – | – |
| Comparative Example 2 | Bad | 63 | 0 | 1.0 | – | – |
| Comparative Example 3 | Good | 18 | 58 | 1.3 | – | – |
| Comparative Example 4 | Bad | 65 | 18 | 1.9 | – | – |
| Comparative Example 5 | Bad | 84 | 43 | 4.9 | – | – |

**Claims**

1. A polypropylene block copolymer obtained, using a Ziegler-Natta catalyst, by polymerizing in a first step monomer comprising propylene to form a polymer comprising polypropylene (component A) in an amount of from 60 to 75% by weight of the total polymer amount in the substantial absence of inert solvent first and then, in a second step, polymerizing a mixture of ethylene and propylene in the vapor phase to form an ethylene-propylene copolymer (component B) having an ethylene content of from 20 to 50% by weight in an amount of from 25 to 40% by weight of the total polymer amount, and melt-kneading the resulting polypropylene block copolymer, the melt flow rate of the melt-kneaded polypropylene block copolymer, measured according to JIS K7210 condition 14, is from 0.5 to 10g/10 minutes and the intrinsic viscosity of component B ([$\eta$]B) is at least 2.0 dl/g, and the ratio [$\eta$]B/[$\eta$]A, where [$\eta$]A is the intrinsic viscosity of the component A, is 1.8 or less.

2. A block copolymer as claimed in claim 1, wherein the Ziegler-Natta catalyst contains at least titanium, magnesium and a halogen, as essential components.

3. A copolymer as claimed in claim 1 or 2, wherein the ethylene content of component B is from 25 to 45%, by weight.

4. A copolymer as claimed in any preceding claim, wherein [$\eta$]B is from 2.5 to 4.5 dl/g.

5. A copolymer as claimed in any preceding claim, wherein the ratio [$\eta$]B/[$\eta$]A is from 0.8 to 1.7.

6. A block copolymer as claimed in any preceding claim, wherein the content of components having a molecular weight of 50,000 or less in the 20°C xylene-soluble component in the total polymer after melt-kneading is 2.0% by weight or less.

7. Film formed by melt-extruding polypropylene block copolymer as claimed in claim 6.

8. Composite film including at least one layer formed of film as claimed in claim 6.

**Patentansprüche**

1. Polypropylenblockcopolymer erhalten unter Verwendung eines Ziegler-Natta-Katalysators durch Polymerisation in einem ersten Schritt eines Propylen umfassenden Monomers, wobei zuerst im wesentlichen in Abwesenheit eines inerten Lösungsmittels ein Polypropylen in einer Menge von 60 bis 75 Gew.-% der Gesamtmenge des Polypropylenblockcopolymers umfassendes Polymer (Bestandteil A) erhalten wird, und dann in einem zweiten Schritt Polymerisation eines Gemisches aus Ethylen und Propylen in der Gasphase, wobei ein Ethylen-Propylen-Copolymer (Bestandteil B) mit einem Ethylengehalt von 20 bis 50 Gew.-% in einer Menge von 25 bis 40 Gew.-% der Gesamtpolymermenge erhalten wird, und Schmelzkneten des entstandenen Polypropylenblockcopolymers, wobei der Schmelzindex des schmelzgekneteten Polypropylenblockcopolymers, gemessen gemäß JIS K7210 Bedingung 14, 0.5 bis 10 g/10 Minuten und die Grenzviskosität des Bestandteils B ([$\eta$]B) mindestens 2.0 dl/g beträgt und das Verhältnis ([$\eta$]B/[$\eta$]A), wobei [$\eta$]A die Grenzviskosität des Bestandteils A ist, 1.8 oder weniger beträgt.

2. Blockcopolymer nach Anspruch 1, wobei der Ziegler-Natta-Katalysator mindestens Titan, Magnesium und ein Halogenatom als wesentliche Bestandteile enthält.

3. Copolymer nach Anspruch 1 oder 2, in dem der Ethylengehalt des Bestandteils B 25 bis 45 Gew.-% beträgt.

4. Copolymer nach einem der vorstehenden Ansprüche, in dem [$\eta$]B 2.5 bis 4.5 dl/g beträgt.

5. Copolymer nach einem der vorstehenden Ansprüche, in dem das Verhältnis [$\eta$]B/[$\eta$]A 0.8 bis 1.7 beträgt.

6. Blockcopolymer nach einem der vorstehenden Ansprüche, wobei der Gehalt der Bestandteile mit einem Molekulargewicht von 50000 oder weniger im in Xylol mit 20°C löslichen Bestandteil im gesamten Polymer nach Schmelzkneten 2.0 Gew.-% oder weniger beträgt.

7. Folie, gebildet durch Schmelzextrudieren des Polypropylenblockcopolymers nach Anspruch 6.

8. Verbundfolie, die mindestens eine Schicht, gebildet aus einer Folie nach Anspruch 6, einschließt.

**Revendications**

1. Copolymère séquencé de polypropylène obtenu en utilisant un catalyseur de Ziegler-Natta par polymérisation dans une première étape de monomère comprenant du propylène pour former un polymère comprenant du polypropylène (constituant A) dans une quantité de 60 à 75% en poids de la quantité de polymère totale en l'absence substantielle de solvant inerte dans un premier temps et ensuite dans une seconde étape par polymérisation d'un mélange d'éthylène et de propylène en phase vapeur pour former un copolymère d'éthylène-propylène (constituant B) ayant une teneur en éthylène de 20 à 50% en poids dans une quantité de 25 à 40% en poids de la quantité totale de polymère, et par malaxage à l'état de fusion du copolymère séquencé de polypropylène résultant, l'indice de fusion du copolymère séquencé de polypropylène malaxé à l'état de fusion, mesuré selon la condition 14 de la norme JIS K 7210, est de 0,5 à 10 g/10 minutes et la viscosité intrinsèque du constituant B($[\eta]$B) est d'au moins 2,0 dl/g et le rapport $[\eta]$B/$[\eta]$A où $[\eta]$A est la viscosité intrinsèque du constituant A, est de 1,8 ou inférieur.

2. Copolymère séquencé selon la revendication 1, dans lequel le catalyseur de Ziegler-Natta contient au moins du titane, du magnésium et un halogène comme constituants essentiels.

3. Copolymère séquencé selon la revendication 1 ou 2, dans lequel la teneur en éthylène du constituant B est de 25 à 45 % en poids.

4. Copolymère selon l'une quelconque des revendications précédentes ,dans lequel $[\eta]$ B est de 2,5 à 4,5 dl/g.

5. Copolymère selon l'une quelconque des revendications précédentes ,dans lequel le rapport $[\eta]$ B/$[\eta]$ A est de 0,8 à 1,7.

6. Copolymère séquencé selon l'une quelconque des revendications précédentes ,dans lequel la teneur des constituants ayant un poids moléculaire de 50 000 ou inférieur dans le constituant soluble dans du xylène à 20°C dans le polymère total après malaxage à l'état de fusion est de 2,0% en poids ou inférieure.

7. Film formé par extrusion à l'état de fusion de copolymère séquencé de polypropylène selon la revendication 6.

8. Film composite comprenant au moins une couche formée de film selon la revendication 6.